(19) **Europäisches Patentamt / European Patent Office / Office européen des brevets**

(11) **EP 1 267 237 B1**

(12) **FASCICULE DE BREVET EUROPEEN**

(45) Date de publication et mention
de la délivrance du brevet:
**07.11.2007 Bulletin 2007/45**

(51) Int Cl.:
***G05B 19/4103*** *(2006.01)*

(21) Numéro de dépôt: **01810556.9**

(22) Date de dépôt: **11.06.2001**

(54) **Procédé de traitement des paramètres d'une trajectoire spatio-temporelle**

Verfahren zur Berechnung von Parametern einer spatial zeitlichen Bewegungsbahn

Method for processing parameters of a spatial temporal trajectory

(84) Etats contractants désignés:
**AT BE CH CY DE DK ES FI FR GB GR IE IT LI LU
MC NL PT SE TR**

(43) Date de publication de la demande:
**18.12.2002 Bulletin 2002/51**

(73) Titulaire: **TORNOS S.A.**
**2740 Moutier (CH)**

(72) Inventeur: **Paroz, Cedric**
**2732 Saicourt (CH)**

(74) Mandataire: **BOVARD AG**
**Optingenstrasse 16**
**3000 Bern 25 (CH)**

(56) Documents cités:
**EP-A- 0 530 032**      **EP-A- 0 544 346**
**WO-A-98/57240**       **US-A- 5 200 680**
**US-A- 5 528 506**      **US-A- 5 825 654**

• GOTO S ET AL: "TRAJECTORY GENERATION OF
INDUSTRIAL MECHATRONIC SYSTEMS TO
ACHIEVE ACCURATE CONTOUR CONTROL
PERFORMANCE UNDER TORQUE
SATURATION" , PROCEEDINGS OF THE 1995
IEEE INTERNATIONAL CONFERENCE ON
ROBOTICS AND AUTOMATION. NAGOYA,
JAPAN, MAY 21 - 27. 1995, PROCEEDINGS OF
THE INTERNATIONAL CONFERENCE ON
ROBOTICS AND AUTOMATION, NEW YORK,
IEEE, US, VOL. VOL. 3, PAGE(S) 2401-2406
XP000731596 ISBN: 0-7803-1966-4 * abrégé;
figures 4,5 *

Printed by Jouve, 75001 PARIS (FR)

**EP 1 267 237 B1**

**Description**

L'invention se rapporte à un procédé de traitement des paramètres d'une trajectoire spatio-temporelle de déplacement d'un mobile selon au moins un axe, permettant de contrôler sur toute cette trajectoire et pour chaque axe, les formes et valeurs limites de vitesses et d'accélérations.

L'invention se rapporte également au paramètres de déplacement d'un mobile sur une trajectoire obtenus à l'issue d'un traitement conforme au procédé de traitement de paramètres de trajectoire, précité.

Egalement, l'invention se rapporte à la machine comprenant au moins un mobile destiné à être déplacé sur une trajectoire spatio-temporelle sous l'effet d'au moins un organe moteur commandé par des informations obtenues à l'issue d'un traitement conforme au procédé de traitement de paramètres de trajectoire, précité.

Par trajectoire spatio-temporelle, on désigne la trajectoire de déplacement d'un mobile selon au moins un axe, cette trajectoire comprenant au moins un point de départ et étant constituée d'au moins un segment, chaque segment étant défini par des paramètres qui déterminent au moins,

• les coordonnées de son point d'origine par rapport à un point de référence situé sur chaque axe,

• la longueur, ainsi que la forme et la tolérance géométrique admise sur le parcours défini par ce segment,

• la valeur de la vitesse curviligne de déplacement du mobile qui est désirée sur ledit segment.

L'invention s'applique avantageusement mais non limitativement au traitement d'une trajectoire d'outil utilisée avec une machine d'usinage dite à commande numérique.

Un résultat que l'invention vise à obtenir est un procédé de traitement qui permette notamment de diminuer les temps de déplacement en utilisant les organes moteurs d'une machine d'usinage de manière optimale.

L'utilisation optimale des organes moteurs peut être notamment comprise comme étant l'utilisation des organes moteurs au maximum de leurs possibilités en regard de celle de la machine qui les comprend.

Par exemple, l'expression "organe moteur" désigne un moteur de type rotatif et dont l'élément actif, c'est à dire l'élément sur lequel un mouvement moteur peut être prélevé, est entraîné en rotation.

L'expression "organe moteur" peut également désigner un moteur de type linéaire et dont l'élément actif, c'est à dire l'élément sur lequel un mouvement moteur peut être prélevé, est entraîné en translation.

Pour la suite de la description, on considère également que l'expression "caractéristique dite couple vitesse" de l'organe moteur, représente l'évolution de la force délivrée par l'élément actif de cet organe moteur en fonction de sa vitesse de fonctionnement.

Cette caractéristique est en générale inhérente à chaque organe moteur et constitue une information disponible auprès du constructeur de l'organe moteur considéré.

L'expression "caractéristique dite couple vitesse" prend toute sa valeur lorsque l'organe moteur est de type rotatif, mais cela n'est pas limitatif pour l'invention.

Il existe des procédés de traitement de paramètres d'une trajectoire en temps réel, mais ces procédés engendrent des simplifications inutiles dans le cas de trajectoires qui peuvent être enregistrées sur les supports à cet effet pour n'être utilisées qu'au moment opportun.

Le procédé de régulation de vitesse d'avance du brevet EP-A-530032 a été particulièrement étudié pour déterminer les vitesses d'avances admissibles sur des trajectoires partiellement ou totalement circulaires et ne convient par pour le traitement des paramètres d'autres type de trajectoires.

Le procédé de régulation de vitesse d'avance du brevet US-A-5 528 506 prévoit une manière d'exploiter les paramètres de vitesse d'avance admissible (accélération et ralentissement) préalablement calculés et mises en mémoire tampon pour chacune des parties d'une trajectoire préalablement découpée en plusieurs parties.

Le procédé plus récent de la demande WO-A-9857240, propose de recalculer la vitesse d'avance ainsi que les accélérations et les décélérations sur différentes partie de trajectoire en fonction d'au moins l'une des lois que sont une loi dite "polynomiale", une loi dite "spline" et une loi dite "linéaire".

Selon ce dernier procédé de traitement de paramètres de trajectoires en temps réel, la courbe d'accélération suit une équation du second degré, paramétrée pour avoir une rampe d'accélération maximale.

Lorsque la vitesse à atteindre est grande, le traitement réduit la rampe d'accélération afin que la limite maximale de l'accélération (obtenue pour le couple maximum d'un organe moteur de type rotatif) ne soit pas dépassée. Les paramètres de la courbe sont donc calculés pour ne pas dépasser cette accélération maximale. La rampe résultante est ainsi inférieure à la rampe physiquement réalisable.

Le procédé de traitement de l'invention permet d'obtenir un gain de temps sur les mises en vitesses, et ce, en respectant la limite d'accélération et la limite de rampe.

Le procédé de l'invention permet de prendre en compte, par exemple, la variation de la limite d'accélération

2

en fonction de la vitesse (caractéristique "couple vitesse").

L'invention a donc pour objet un procédé du type précité, selon la revendication 1.

L'invention a également pour objet :

- les paramètres de déplacement d'un mobile sur une trajectoire obtenus à l'issue d'un traitement conforme au procédé de traitement de paramètres de trajectoire, précité,

- la machine comprenant au moins un mobile destiné à être déplacé sur une trajectoire spatio-temporelle sous l'effet d'au moins un organe moteur commandé par des informations obtenues à l'issue d'un traitement conforme audit procédé de traitement de paramètres de trajectoire, précité.

L'invention sera mieux comprise à la lecture de la description qui suit à titre d'exemple non limitatif, en regard du dessin ci-annexé qui représente à titre d'exemple :

Figure 1, un graphique représentant la trajectoire d'un mobile dans un plan, cette trajectoire étant constituée d'une pluralité de segments,

Figure 2, un graphique représentant la trajectoire de la figure 1 et, associée au moins à chacun des points d'origine de ses segments, l'abscisse curviligne de ce point d'origine,

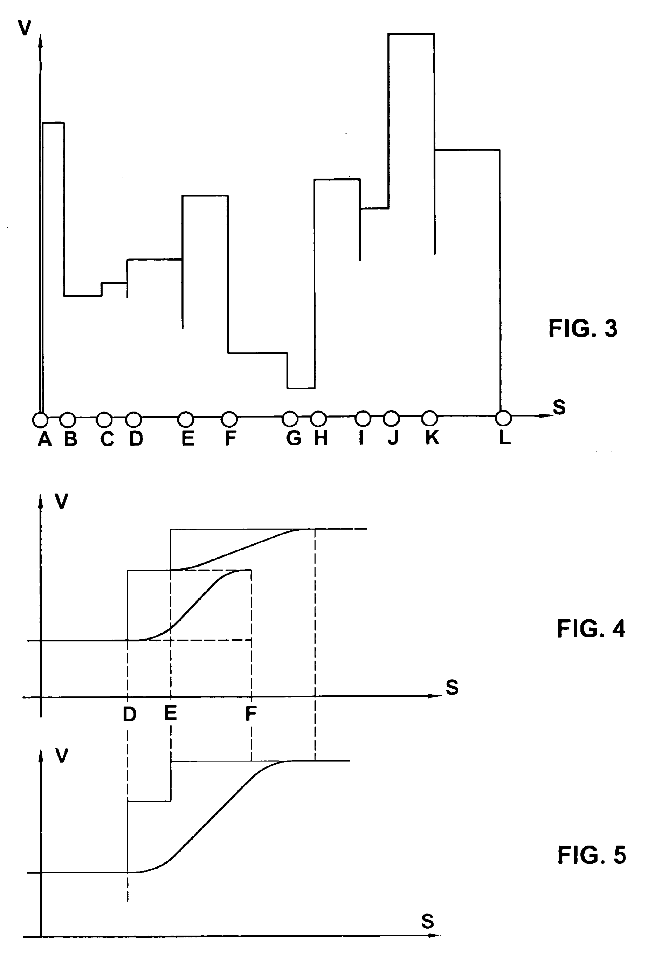

Figure 3, un graphique représentant la vitesse désirée sur chaque segment en fonction de l'abscisse curviligne, notamment, du point d'origine de chaque segment,

Figure 4, un graphique représentant, en fonction de l'abscisse curviligne, les vitesses désirées associées à plusieurs segments,

Figure 5, un graphique représentant, en fonction de l'abscisse curviligne, la vitesse désirée qui, associée à plusieurs segments, est obtenue par combinaison des expressions des vitesses désirées associées aux segments de la figure 4.

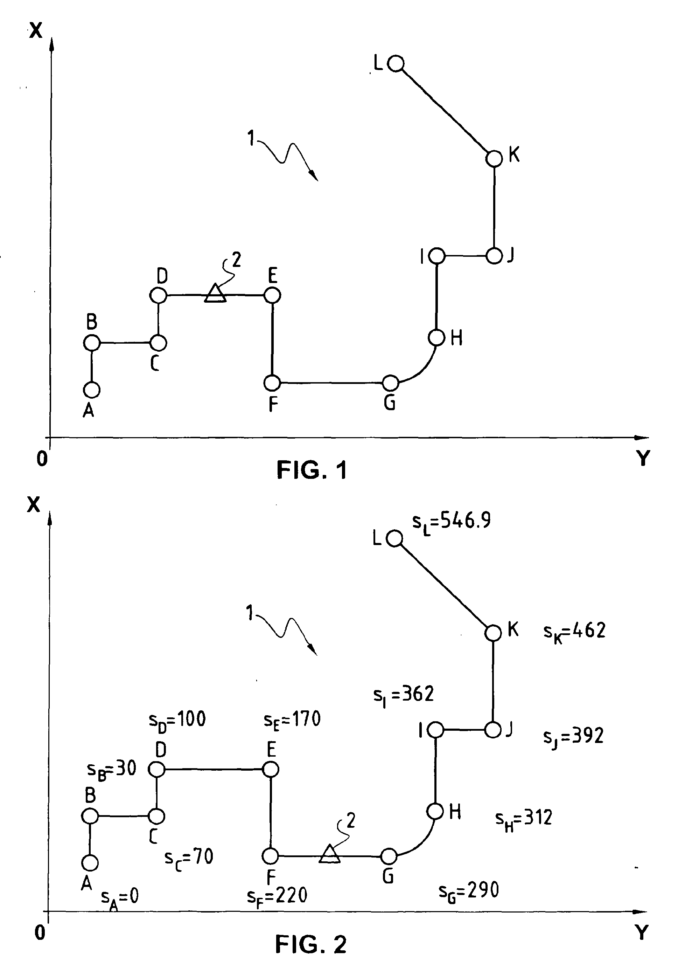

En se reportant au dessin (figures 1 et 2), on voit une trajectoire spatio-temporelle 1 de déplacement d'un mobile 2 (symbolisé par un triangle) selon au moins un axe "X", "Y".

Tel que cela apparaît, la trajectoire 1 comprend au moins un point de départ "A" et est constituée d'au moins un segment "AB" et classiquement de plusieurs segment "AB", "BC", "CD", "...".

Sur le dessin, les différents points "A", "B", "C", ... de la trajectoire on été symbolisés par un cercle.

Bien que cela n'apparaisse pas de manière flagrante sur le dessin, chaque segment est défini par des paramètres qui déterminent au moins,

• les coordonnées de son point d'origine "A", "B", "C", ... par rapport à un point de référence "0" situé sur chaque axe "X", "Y",

• la longueur, ainsi que la forme et la tolérance géométrique admise sur le parcours défini par ce segment,

• la valeur de la vitesse curviligne de déplacement du mobile (2) qui est désirée sur ledit segment.

De manière remarquable, pour réaliser le traitement de paramètres selon le procédé de l'invention:

- on saisit les données de la trajectoire 1, c'est à dire les paramètres de chaque segment qu'elle comporte, et

- on calcule l'abscisse curviligne "s" de la trajectoire 1 au moins pour le point d'origine "A", "B", "C", ... de chaque segment que comprend cette trajectoire 1, c'est à dire, que lorsque la trajectoire 1 comprend plusieurs segments successifs "AB", "BC", "CD", ... on calcule la somme des longueurs des segments successifs situés entre ledit point de départ "A" de la trajectoire 1 et ledit point d'origine de chaque segment qu'elle comprend et,

- au résultat du calcul de l'abscisse curviligne "s" de chaque point d'origine d'un segment, on associe au moins une information relative à la vitesse désirée de déplacement du mobile 2 sur le segment considéré, et ce, d'une manière telle qu'on puisse, d'une part, établir un graphique représentant la vitesse désirée "V" en fonction du chemin total parcouru depuis le point de départ "A" de la trajectoire 1 et, d'autre part, détecter tout saut instantané de la vitesse désirée "V" qui se trouve situé au moins au niveau du point d'origine d'un segment,

- on choisit au moins une loi d'accélération "a(t)" prédéterminée qui se présente sous une formulation telle que l'application de cette loi d'accélération "a(t)" à tout saut instantané de la vitesse désirée "V", engendre une mise en vitesse progressive au-delà du point d'origine du segment considéré,

- on applique ladite loi d'accélération "a(t)" prédéterminée à chaque saut positif instantané de vitesse présent dans le graphisme de la vitesse désirée "V" en fonction de l'abscisse curviligne "s", et ce, de manière à associer à chaque saut positif de la vitesse désirée "V", une expression de la vitesse en fonction de l'abscisse curviligne, puis on mémorise ces informations,

- on combine les expressions de vitesse obtenues, et ce, de manière à obtenir, pour toute la trajectoire 1, une seule expression donnant la vitesse finale en fonction de l'abscisse curviligne "s",

- on définit des intervalles de temps successifs de valeur prédéterminée et, pour chacun des intervalles de temps successifs, on calcule le chemin curviligne parcouru depuis le point de départ de la trajectoire 1,

- pour chacun des intervalles de temps, on extrait la position du mobile 2 selon chaque axe "X", "Y" en fonction du chemin curviligne parcouru,

- on mémorise les positions dudit mobile 2 selon chaque axe "X", "Y", en fonction du temps écoulé depuis le point de départ de la trajectoire 1,

- on exploite ces informations pour commander le déplacement dudit mobile 2 sur une machine comprenant ce mobile 2.

La machine précitée n'a pas été représentée, car elle n'est pas nécessaire à la compréhension de l'invention.
De manière encore remarquable, au moins avant d'extraire les informations de positions du mobile 2 selon chaque axe "X", "Y" en fonction du temps, on reprend le traitement des paramètres de la trajectoire 1, et ce,

- en la parcourant de la fin vers le début, c'est à dire en prenant comme point de départ fictif de cette trajectoire 1 un point "L" qui constitue en fait le dernier point de ladite trajectoire 1 et comme point d'origine de chaque segment, le dernier point de ce segment, et

- en calculant la distance curviligne totale séparant chaque point de ladite trajectoire dudit point de départ fictif "L" et, lors de ce traitement, on considère chaque saut instantané de vitesse négatif, c'est à dire chaque saut instantané qui exige une accélération négative, à savoir une décélération.

D'une manière encore remarquable, on prend en compte au moins la caractéristique "couple vitesse" d'un organe moteur destiné à déplacer le mobile 2 sur la trajectoire 1 et à cet effet:

- on considère ladite caractéristique dite "couple vitesse" de cet organe moteur, c'est à dire l'évolution de la force délivrée par un élément actif de cet organe moteur en fonction de sa vitesse de fonctionnement,

- en fonction de l'abscisse curviligne "s", on calcule un facteur de correction dépendant de la caractéristique "couple vitesse" de façon à tenir compte de variations de la force disponible sur l'élément actif de l'organe moteur, en fonction de la vitesse désirée "V" pour le mobile "2",

- on applique ce facteur de correction à la vitesse finale avant l'étape d'extraction des positions du mobile "2" sur chaque axe, en fonction de la valeur du chemin curviligne parcouru.

D'une manière tout aussi remarquable, préalablement à l'étape de calcul permettant la conversion des données de la trajectoire 1 en coordonnées curvilignes, on recherche d'éventuels segments non-linéaires complexes de la trajectoire et on les transforme en une succession de plus petits segments de forme déterminée respectant la tolérance géométrique.
Sachant que mathématiquement, dans un repère X,Y :

- le tracé d'une droite est géré par une relation "y = f(x)" de type,

$$\text{"y"} = (ax + b),$$

c'est à dire une équation à deux paramètres (a et b),

- le tracé d'un cercle de rayon "R" est géré par une relation "y = f(x)" de type,

$$\text{"y"} = [( R^2 - (x + X_o)^2) - Y_o ]^{1/2} ,$$

c'est à dire une équation à trois paramètres (R, $X_o$ et $Y_o$),

- le tracé d'un "spline" de degré 3 est géré par une équation "y = f(x)" de type,

$$\text{"y"} = a.x^3 + b.x^2 + c.x + d ,$$

c'est à dire une équation à quatre paramètres (a, b, c, d),

on défini comme "segment non linéaire complexe" un segment dont l'équation mathématique "y = f(x)" comprend plus d'un nombre prédéterminé de paramètres, l'homme du métier étant à même de fixer ce nombre prédéterminé.

Avantageusement et de manière remarquable, au résultat du calcul de l'abscisse curviligne "s" de chaque point d'origine d'un segment, on associe au moins une autre information quant à elle relative à la vitesse désirée "V" de déplacement du mobile 2 sur le segment qui précède le segment considéré.

D'une manière également avantageuse et remarquable, au résultat du calcul de l'abscisse curviligne "s" de chaque point d'origine d'un segment, on associe au moins une autre information quant à elle relative à la vitesse désirée "V" de déplacement du mobile 2 audit point d'origine considéré, de manière à respecter une tolérance géométrique déterminée audit point d'origine considéré.

De manière spécialement remarquable, pour calculer en un point "N" le chemin curviligne parcouru depuis le point de départ de la trajectoire, sachant :

- qu'à un point donné "$s_N$" de l'abscisse curviligne de cette trajectoire correspond une vitesse finale "$V(s_N)$", qui peut être utilisée pour calculer la longueur du déplacement curviligne parcouru à cette vitesse "$V(s_N)$" en un intervalle de temps "Dt", et

- qu'à l'issue de ce déplacement, le mobile sera en une nouvelle position curviligne "$s_N + D s_N$", à laquelle correspond une nouvelle valeur de vitesse finale "$V(s_N + D s_N)$",

- on utilise cette relation pour calculer itérativement les nouveaux chemins "$D s_N$" correspondant aux intervalles de temps successifs "Dt".

D'une autre manière spécialement remarquable, on choisit une loi d'accélération qui se présente sous la formulation :

$$a (t) = (Ao / 2) . [ 1 - \cos ( 2 . Jo .t / Ao ) ]$$

dans laquelle formulation,

- "Cos" est le Cosinus,

- "t" est le temps,

- "a (t)" est la valeur de l'accélération en fonction du temps,

- "Ao" est une valeur maximale prédéterminée de l'accélération, et

- "Jo" est une valeur maximale prédéterminée de la dérivée de l'accélération.

## Revendications

1. Procédé de traitement des paramètres d'une trajectoire spatio-temporelle (1) de déplacement d'un mobile (2) selon au moins un axe (X, Y), cette trajectoire comprenant au moins un point de départ (A) et étant constituée d'au moins un segment (AB, BC, CD, ...), chaque segment étant défini par des paramètres qui déterminent au moins,

   . les coordonnées de son point d'origine (A, B, C, ...) par rapport à un point de référence (0) situé sur chaque axe (X, Y),
   . la longueur, ainsi que la forme et la tolérance géométrique admise sur le parcours défini par ce segment,
   . la valeur de la vitesse curviligne de déplacement du mobile (2) qui est désirée sur ledit segment, selon lequel procédé,

      - on saisit les données de la trajectoire (1), c'est à dire les paramètres de chaque segment qu'elle comporte, et
      - on calcule l'abscisse curviligne (s) de la trajectoire (1) au moins pour le point d'origine (A, B, C, ...) de chaque segment que comprend cette trajectoire (1), et
      - au résultat du calcul de l'abscisse curviligne (s) de chaque point d'origine d'un segment, on associe au moins une information relative à la vitesse désirée de déplacement du mobile (2) sur le segment considéré, et ce, d'une manière telle qu'on puisse, d'une part, établir un graphique représentant la vitesse désirée (V) en fonction du chemin total parcouru depuis le point de départ (A) de la trajectoire (1) et, d'autre part, détecter tout saut instantané de la vitesse désirée (V) qui se trouve situé au moins au niveau du point d'origine d'un segment,
      - on choisit au moins une loi d'accélération (a(t)) prédéterminée qui se présente sous une formulation telle que l'application de cette loi d'accélération (a(t)) à tout saut instantané de la vitesse désirée (V), engendre une mise en vitesse progressive au-delà du point d'origine du segment considéré,
      - on applique ladite loi d'accélération (a(t)) prédéterminée à chaque saut positif instantané de vitesse présent dans le graphisme de la vitesse désirée (V) en fonction de l'abscisse curviligne (s), et ce, de manière à associer à chaque saut positif de la vitesse désirée (V), une expression de la vitesse en fonction de l'abscisse curviligne, puis on mémorise ces informations,
      - on combine les expressions de vitesse obtenues, et ce, de manière à obtenir, pour toute la trajectoire (1), une seule expression donnant la vitesse finale en fonction de l'abscisse curviligne (s),
      - on définit des intervalles de temps successifs de valeur prédéterminée et, pour chacun des intervalles de temps successifs, on calcule le chemin curviligne parcouru depuis le point de départ de la trajectoire,
      - pour chacun des intervalles de temps, on extrait la position du mobile (2) selon chaque axe (X, Y), en fonction du chemin curviligne parcouru,
      - on mémorise les positions dudit mobile (2) selon chaque axe (X, Y), en fonction du temps écoulé depuis le point de départ de la trajectoire (1),
      - on exploite ces informations pour commander le déplacement dudit mobile (2) sur une machine comprenant ce mobile (2),

   ce procédé étant **caractérisé en ce qu'**au moins avant d'extraire les informations de positions du mobile (2) selon chaque axe (X, Y) en fonction du temps, on reprend le traitement des paramètres de la trajectoire (1), et ce,

      - en la parcourant de la fin vers le début, c'est à dire en prenant comme point de départ fictif de cette trajectoire (1) un point (L) qui constitue en fait le dernier point de ladite trajectoire (1) et comme point d'origine de chaque segment, le dernier point de ce segment, et
      - en calculant la distance curviligne totale séparant chaque point de ladite trajectoire dudit point de départ fictif (L) et, lors de ce traitement, on considère chaque saut instantané de vitesse négatif, c'est à dire chaque saut instantané qui exige une accélération négative, à savoir une décélération.

2. Procédé de traitement selon la revendication 1 **caractérisé en ce qu'**on prend en compte au moins la caractéristique "couple vitesse" d'un organe moteur destiné à déplacer le mobile (2) sur la trajectoire (1) et à cet effet:

      - on considère ladite caractéristique dite "couple vitesse" de cet organe moteur, c'est à dire l'évolution de la force délivrée par un élément actif de cet organe moteur en fonction de sa vitesse de fonctionnement,
- en fonction de l'abscisse curviligne (s), on calcule un facteur de correction dépendant de la caractéristique "couple vitesse" de façon à tenir compte de variations de la force disponible sur l'élément actif de l'organe moteur, en fonction de la vitesse désirée (V) pour le mobile (2),
- on applique ce facteur de correction à la vitesse finale avant l'étape d'extraction des positions du mobile (2) sur chaque axe (X, Y), en fonction de la valeur du chemin curviligne parcouru.

**3.** Procédé de traitement selon l'une des revendications 1 ou 2 **caractérisé en ce que** préalablement à l'étape de calcul permettant la conversion des données de la trajectoire (1) en coordonnées curvilignes, on recherche d'éventuels segments non-linéaires complexes de la trajectoire et on les transforme en une succession de plus petits segments de forme déterminée respectant la tolérance géométrique,

**4.** Procédé de traitement selon l'une des revendications 1 à 3 **caractérisé en ce qu'**au résultat du calcul de l'abscisse curviligne (s) de chaque point d'origine d'un segment, on associe au moins une autre information quant à elle relative à la vitesse désirée (V) de déplacement du mobile (2) sur le segment qui précède le segment considéré.

**5.** Procédé de traitement selon l'une des revendications 1 à 4 **caractérisé en ce qu'**au résultat du calcul de l'abscisse curviligne (s) de chaque point d'origine d'un segment, on associe au moins une autre information quant à elle relative à la vitesse désirée (V) de déplacement du mobile (2) audit point d'origine considéré, de manière à respecter une tolérance géométrique déterminée audit point d'origine considéré.

**6.** Procédé de traitement selon l'une des revendications 1 à 5 **caractérisé en ce que** pour calculer en un point (N) le chemin curviligne parcouru depuis le point de départ de la trajectoire, sachant :

- qu'à un point donné ($s_N$) de l'abscisse curviligne de cette trajectoire correspond une vitesse finale ($V(s_N)$), qui peut être utilisée pour calculer la longueur du déplacement curviligne parcouru à cette vitesse ($V(s_N)$) en un intervalle de temps (Dt), et
- qu'à l'issue de ce déplacement, le mobile sera en une nouvelle position curviligne ($s_N + D s_N$), à laquelle correspond une nouvelle valeur de vitesse finale ($V(s_N + D s_N)$),

. on utilise cette relation pour calculer itérativement les nouveaux chemins ($D s_N$) correspondant aux intervalles de temps successifs (Dt).

**7.** Procédé de traitement selon l'une des revendications 1 à 6 **caractérisé en ce qu'**on choisit une loi d'accélération qui se présente sous la formulation :

$$a (t) = (Ao / 2) . [ 1 - Cos ( 2 . Jo . t / Ao ) ]$$

dans laquelle formulation,

. "Cos" est le Cosinus,
. "t" est le temps,
. "a (t)" est la valeur de l'accélération en fonction du temps,
. "Ao" est une valeur maximale prédéterminée de l'accélération, et
. "Jo" est une valeur maximale prédéterminée de la dérivée de l'accélération.

**8.** Paramètres de déplacement d'un mobile (2) sur une trajectoire (1) obtenus à l'issue d'un traitement conforme au procédé de traitement objet d'une quelconque des revendications 1 à 7.

**9.** Machine comprenant au moins un mobile (2) destiné à être déplacé sur une trajectoire spatio-temporelle (1) sous l'effet d'au moins un organe moteur commandé par des informations obtenues à l'issue d'un traitement conforme au procédé de traitement des paramètres de la trajectoire (1) de ce mobile (2), selon l'une quelconque des revendications 1 à 7.

**Claims**

1. Method for processing parameters of a spatiotemporal trajectory (1) of movement of a moving body (2) along at least one axis (X, Y), this trajectory (1) comprising at east one starting point (A) and being made up of at least one segment (AB, BC, CD, ...), each segment being defined by parameters which determine at least

   . the coordinates of its point of origin (A, B, C, ...) relative to a reference point (0) situated on each axis (X, Y),
   . the length, as well as the shape and the geometric tolerance, accepted on the path defined by this segment,
   . the value of the curvilinear speed of movement of the moving body (2) which is desired over said segment,
   according to which method

   - the data of the trajectory (1), i.e., the parameters of each segment it includes, are collected, and
   - the curvilinear abscissa (s) of the trajectory (1) is calculated at least for the point of origin (A, B, C, ...) of each segment which this trajectory (1) comprises, and
   - the result of the calculation of the curvilinear abscissa (s) of each point of origin of a segment is associated with at least one item of information relative to the desired speed of movement of the moving body (2) over the segment in question, and this in such a way that it is possible, on the one hand, to establish a graph representing the desired speed (V) in terms of the total path travelled from the starting point (A) of the trajectory (1) and, on the other hand, to detect any instantaneous jump in the desired speed (V) which is situated at least at the level of the point of origin of a segment,
   - at least one predetermined law of acceleration (a(t)) is chosen which is so formulated that the application of this law of acceleration (a(t)) to any instantaneous jump in the desired speed (V) results in gradually getting up speed beyond the point of origin of the segment in question,
   - said predetermined law of acceleration (a(t)) is applied to every instantaneous positive jump in speed present in the graph of the desired speed (V) in terms of the curvilinear abscissa (s), this in such a way as to associate with each positive jump in the desired speed (V) an expression of the speed in terms of the curvilinear abscissa, then these data are stored,
   - the expressions of speed obtained are combined so as to obtain, for the whole trajectory (1), a single expression giving the final speed in terms of the curvilinear abscissa (s),
   - successive intervals of time of predetermined value are defined and, for each of the successive intervals of time, the curvilinear path travelled from the starting point (A) of the trajectory is calculated,
   - for each of the intervals of time, the position of the moving body (2) along each axis (X, Y) is extracted in terms of the curvilinear path travelled,
   - the positions of said moving body (2) along each axis (X, Y) are stored, as a function of the time elapsed from the starting point of the trajectory (1),
   - these data are utilized to control the movement of said moving body (2) on a machine comprising this moving body (2),

   this method being **characterised in that** at least before extracting the position data of the moving body (2) along each axis (X, Y) as a function of the time, the processing of the parameters of the trajectory (1) is repeated,

   - travelling over it from the end toward the beginning, i.e., taking as imaginary starting point of this trajectory (1) a point (L) which in fact constitutes the last point of said trajectory (1) and as point of origin of each segment, the last point of this segment, and
   - calculating the total curvilinear distance separating each point of said trajectory from said imaginary starting point (L) and, at the time of this processing, considering each negative instantaneous jump in speed, i.e., each instantaneous jump which demands a negative acceleration, viz., a deceleration.

2. Method for processing according to the claim 1, **characterised in that** at least the "speed torque" characteristic of a driving mechanism intended to move the moving body (2) over the trajectory (1) is taken into account, and to this end:

   - said characteristic called "speed torque" of this driving mechanism is considered, i.e., the evolution of the force supplied by an active element of this driving mechanism in terms of its operating speed,
   - in terms of the curvilinear abscissa (s), a correction factor is calculated dependent upon the "speed torque" characteristic so as to take into account variations of the force available on the active element of the driving mechanism, in terms of the desired speed (V) for the moving body (2),
   - this correction factor is applied to the final speed before the step of extraction of the positions of the moving body (2) on each axis, in terms of the value of the curvilinear path travelled.

3. Method for processing according to one of the claims 1 or 2, **characterised in that** previous to the calculation step permitting the conversion of the data of the trajectory (1) into curvilinear coordinates, a search is made for possible complex non-linear segments of the trajectory, and they are converted into a succession of smaller segments of a given shape respecting the geometrical tolerance.

4. Method for processing according to one of the claims 1 to 3, **characterised in that** the result of the calculation of the curvilinear abscissa (s) of each point of origin of a segment is associated with at least one other item of information which, as for it, is relative to the desired speed of movement (V) of the moving body (2) over the segment preceding the segment in question.

5. Method for processing according to one of the claims 1 to 4, **characterised in that** the result of the calculation of the curvilinear abscissa (s) of each point of origin of a segment is associated with at least one other item of information which, as for it, is relative to the desired speed of movement (V) of the moving body (2) at said point of origin in question, in such a way as to respect a given geometric tolerance at said point of origin in question.

6. Method for processing according to one of the claims 1 to 5, **characterised in that** to calculate at a point (N) the curvilinear path travelled from the starting point of the trajectory, knowing:

- that to a given point ($S_N$) of the curvilinear abscissa of this trajectory, a final speed ($V(S_N)$) corresponds which may be used to calculate the length of the curvilinear movement travelled at this speed ($V(S_N)$) during an interval of time (Dt), and
- that at the conclusion of this movement, the moving body will be in a new curvilinear position ($S_N + D S_N$), to which a new final speed value ($V(S_N + D S_N)$) corresponds,

. this relation is used to calculate iteratively the new paths ($D S_N$) corresponding to the successive intervals of time (Dt).

7. Method for processing according to one of the claims 1 to 6, **characterised in that** a law of acceleration is chosen which has the formulation:

$$a(t) = (Ao/2) \times [1 - \cos(2 \times Jo \times t / Ao)]$$

in which formulation

. "cos" is the cosine,
. "t" is the time,
. "a(t)" is the value of the acceleration in terms of the time,
. "Ao" is a predetermined maximum acceleration value, and
. "Jo" is a predetermined maximum value of the derivative of the acceleration.

8. Parameters of movement of a moving body (2) over a trajectory (1) obtained at the conclusion of processing in accordance with the method of processing which is the subject matter of any one of the claims 1 to 7.

9. Machine comprising at least one moving body (2) intended to be moved over a spatiotemporal trajectory (1) under the influence of at least one driving mechanism controlled by data obtained at the conclusion of processing in accordance with the method of processing parameters of the trajectory (1) of this moving body (2), according to any one of the claims 1 to 7.

**Patentansprüche**

1. Verfahren zur Berechnung von Parametern einer raumzeitlichen Bewegungsbahn (1) eines beweglichen Körpers (2) auf mindestens einer Achse (X, Y), wobei diese Bahn mindestens einen Ausgangspunkt (A) aufweist und aus mindestens einem Segment (AB, BC, CD, usw.) besteht, wobei jedes Segment durch Parameter festgelegt wird, die mindestens Folgendes bestimmen:

. die Koordinaten seines Nullpunktes (A, B, C, usw.) zum auf jeder Achse (X, Y) liegenden Referenzpunkt (0),

. die Länge sowie die Form und die zulässige geometrische Toleranz auf der durch dieses Segment festgelegten Bahn,

. den Wert der auf dem genannten Segment gewünschten Bogengeschwindigkeit der Bewegung des beweglichen Körpers (2), wobei man nach diesem Verfahren

- die Daten der Bahn (1) eingibt, das heißt, die Parameter jedes Segmentes, das sie aufweist, und

- man die Bogenlänge (s) der Bahn (1) mindestens für den Nullpunkt (A, B, C, usw.) jedes Segmentes berechnet, das diese Bahn (1) enthält, und

- man mit dem Ergebnis der Berechnung der Bogenlänge (s) jedes Nullpunktes eines Segmentes mindestens eine Information assoziiert, welche sich auf die gewünschte Bewegungsgeschwindigkeit des beweglichen Körpers (2) auf dem betreffenden Segment bezieht, und dies derart, dass man einerseits einen Graphen erstellt, der die gewünschte Geschwindigkeit (V) in Abhängigkeit von dem gesamten, ab dem Ausgangspunkt (A) der Bahn (1) durchlaufenen Weg darstellt, und andererseits jeden Ist-Sprung der gewünschten Geschwindigkeit (V) erfassen kann, der zumindest am Nullpunkt eines Segmentes auftritt.

- man mindestens ein vorgegebenes, in Form einer Formel vorliegendes Beschleunigungsgesetz (a(t)) wählt, so dass die Anwendung dieses Beschleunigungsgesetzes (a(t)) bei jedem Ist-Sprung der gewünschten Geschwindigkeit (V) nach dem Nullpunkt des betreffenden Segmentes zu einer schrittweisen Geschwindigkeitsanpassung führt,

- man das genannte vorgegebene Beschleunigungsgesetz (a(t)) bei jedem positiven Ist-Sprung der Geschwindigkeit anwendet, der im Graphen der gewünschten Geschwindigkeit (V) in Abhängigkeit von der Bogenlänge (s) auftritt, und dies derart, dass jeder positive Sprung der gewünschten Geschwindigkeit (V) mit einem Ausdruck der Geschwindigkeit in Abhängigkeit von der Bogenlänge (s) assoziiert wird, und man diese Informationen dann speichert,

- man die erhaltenen Geschwindigkeitsausdrücke kombiniert, und dies derart, dass für die gesamte Bahn (1) ein einziger Ausdruck erhalten wird, der die Endgeschwindigkeit in Abhängigkeit von der Bogenlänge (s) angibt,

- man aufeinander folgende Zeitintervalle von vorgegebenem Wert festlegt und man für jedes der aufeinander folgenden Zeitintervalle den ab dem Ausgangspunkt der Bahn durchlaufenen Bogenweg berechnet,

- man für jedes der Zeitintervalle die Position des beweglichen Körpers (2) auf jeder Achse (X, Y) in Abhängigkeit von dem durchlaufenen Bogenweg errechnet,

- man die Positionen des genannten beweglichen Körpers (2) auf jeder Achse (X, Y) in Abhängigkeit von der ab dem Ausgangspunkt der Bahn

(1) verflossenen Zeit speichert,

- man diese Informationen dazu verwendet, um die Bewegung des genannten beweglichen Körpers (2) auf einer diesen beweglichen Körper (2) aufweisenden Maschine zu steuern,

wobei dieses Verfahren **dadurch gekennzeichnet ist, dass** man zumindest vor dem Errechnen der Informationen über die Positionen des beweglichen Körpers (2) in Abhängigkeit von der Zeit auf jeder Achse (X, Y) die Berechnung der Parameter der Bahn (1) wieder aufnimmt, und dies

- indem sie vom Ende zum Beginn durchlaufen wird, das heißt, indem man als fiktiven Ausgangspunkt dieser Bahn (1) einen Punkt (L), der eigentlich den letzten Punkt der genannten Bahn (1) darstellt, und als Nullpunkt jedes Segmentes den letzten Punkt dieses Segmentes benutzt, und

- indem man die gesamte Bogendistanz berechnet, die jeden Punkt der genannten Bahn vom genannten fiktiven Ausgangspunkt (L) trennt, und man bei dieser Berechnung jeden negativen Ist-Sprung der Geschwindigkeit berücksichtigt, das heißt, jeden Ist-Sprung, der eine negative Beschleunigung erforderlich macht, nämlich eine Verlangsamung.

2. Berechnungsverfahren nach Anspruch 1, **dadurch gekennzeichnet, dass** man mindestens die "Drehmoment-Drehzahl-Kennlinie" eines Antriebsorgans berücksichtigt, das zur Bewegung des beweglichen Körpers (2) auf der Bahn (1) bestimmt ist, und man zu diesem Zweck:

- die sogenannte "Drehmoment-Drehzahl-Kennlinie" dieses Antrieborgans, das heißt die Entwicklung der von einem aktiven Bauteil dieses Antrieborgans gelieferten Kraft, in Abhängigkeit von seiner Arbeitsgeschwindigkeit berücksichtigt,

- man in Abhängigkeit von der Bogenlänge (s) einen von der "Drehmoment-Drehzahl-Kennlinie" abhängigen Korrekturfaktor berechnet, so dass in Abhängigkeit von der gewünschten Geschwindigkeit (V) des beweglichen Körpers (2) Schwankungen der verfügbaren Kraft am aktiven Bauteil des Antriebsorgans berücksichtigt werden,
- man diesen Korrekturfaktor auf die Endgeschwindigkeit vor dem Schritt des Errechnens der Positionen des beweglichen Körpers (2) auf jeder Achse (X, Y) in Abhängigkeit vom Wert des durchlaufenen Bogenweges anwendet.

3. Berechnungsverfahren nach Anspruch 1 oder 2, **dadurch gekennzeichnet, dass** man vor dem Schritt zur Berechnung, welche die Konvertierung der Daten der Bahn (1) in Bogenkoordinaten gestattet, nach eventuell vorhandenen, komplexen nichtlinearen Segmenten der Bahn sucht und sie in eine Folge kleinerer Segmente bestimmter Form umwandelt, welche die geometrische Toleranz einhalten,

4. Berechnungsverfahren nach einem der Ansprüche 1 bis 3, **dadurch gekennzeichnet, dass** man mit dem Ergebnis der Berechnung der Bogenlänge (s) jedes Nullpunktes eines Segmentes mindestens eine andere Information assoziiert, die sich ihrerseits auf die gewünschte Geschwindigkeit (V) der Bewegung des beweglichen Körpers (2) auf dem Segment bezieht, das dem betreffenden Segment vorausgeht.

5. Berechnungsverfahren nach einem der Ansprüche 1 bis 4, **dadurch gekennzeichnet, dass** man mit dem Ergebnis der Berechnung der Bogenlänge (s) jedes Nullpunktes eines Segmentes mindestens eine andere Information assoziiert, die sich ihrerseits auf die gewünschte Geschwindigkeit (V) der Bewegung des beweglichen Körpers (2) am genannten betreffenden Nullpunkt bezieht, so dass eine bestimmte geometrische Toleranz am genannten betreffenden Nullpunkt eingehalten wird.

6. Berechnungsverfahren nach einem der Ansprüche 1 bis 5, **dadurch gekennzeichnet, dass** man zur Berechnung des an einem Punkt (N) ab dem Ausgangspunkt der Bahn durchlaufenden Bogenwegs, für die man weiß, dass

- einem gegebenen Punkt ($S_N$) der Bogenlänge dieser Bahn die Endgeschwindigkeit ($V(S_N)$) entspricht, die dazu benutzt werden kann, um die Länge der mit dieser Geschwindigkeit ($V(s_N)$) in einem Zeitintervall (Dt) durchlaufenen Bogenbewegung zu berechnen, und
- sich der bewegliche Körper am Ende dieser Bewegung in einer neuen Bogenposition ($S_N + D S_N$) befindet, der ein neuer Wert der Endgeschwindigkeit ($V(S_N + D S_N)$) entspricht,

    . dieses Verhältnis zur iterativen Berechnung der neuen Wege ($D S_N$) benutzt, die den aufeinander folgenden Zeitintervallen (Dt) entsprechen.

7. Berechnungsverfahren nach einem der Ansprüche 1 bis 6, **dadurch gekennzeichnet, dass** man ein Beschleunigungsgesetz mit folgender Formel wählt:

$$a (1) = (Ao / 2) . [ 1 – Cos ( 2 . Jo .t / Ao) ]$$

eine Formel, in der

. "Cos" der Kosinus ist,
. "t" die Zeit ist,
. "a(t)" der Beschleunigungswert in Abhängigkeit von der Zeit ist,
. "Ao" ein maximaler vorgegebener Beschleunigungswert ist,
. "Jo" ein maximaler vorgegebener Beschleunigungswert der Ableitung der Beschleunigung ist,

8. Parameter der Bewegung eines beweglichen Körpers (2) auf einer Bahn (1), die am Ende einer Berechnung gemäß dem Berechnungsverfahren erhalten werden, das Gegenstand einer der Ansprüche 1 bis 7 ist.

9. Maschine, die mindestens einen beweglichen Körper (2) aufweist, der dazu bestimmt ist, auf einer raumzeitlichen Bewegungsbahn (1) unter Einwirkung mindestens eines Antriebsorgans bewegt zu werden, das durch Informationen gesteuert wird, welche am Ende einer Berechnung gemäß des Verfahrens zur Berechnung der Parameter der Bahn (1) dieses beweglichen Körpers nach einem der Ansprüche 1 bis 7 erhalten werden.

EP 1 267 237 B1

FIG. 1

FIG. 2

12

FIG. 3

FIG. 4

FIG. 5

**EP 1 267 237 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 530032 A
- US 5528506 A
- WO 9857240 A